# EUROPEAN PATENT APPLICATION

(11) **EP 4 557 090 A1**
(43) Date of publication of application: **21.05.2025**
(21) Application number: 23917234.9
(22) Date of filing: 01.12.2023
(51) Int. Cl.: G06F 9/4401

(54) **SYSTEM AWAKENING METHOD, AND ELECTRONIC DEVICE AND COMPUTER-READABLE STORAGE MEDIUM**

(30) Priority: 16.01.2023 CN 202310092771
(71) Applicant: Honor Device Co., Ltd., Shenzhen, Guangdong 518040 (CN)
(72) Inventor: JIN, Jie, Shenzhen, Guangdong 518040 (CN); LIU, Yanpei, Shenzhen, Guangdong 518040 (CN); LIU, Jilin, Shenzhen, Guangdong 518040 (CN); XIONG, Yiang, Shenzhen, Guangdong 518040 (CN)
(74) Representative: Gill Jennings & Every LLP
(86) International application number: PCT/CN2023/135934
(87) International publication number: WO 2024/152766

(57) **Abstract**

This application provides a system wakeup method, an electronic device, and a computer-readable storage medium. The method includes: monitoring a radio frequency front-end control bus in real time in a low power state; and sending a wakeup signal to a register status control module when a signal characteristic of a signal transmitted on the radio frequency front-end control bus meets a preset requirement, where the preset requirement is set based on a signal characteristic of an MIPI RFFE control instruction, and the wakeup signal is used to indicate the register status control module to output an enable signal, so that a system switches from the low power state to a working state or a standby state. When the signal characteristic transmitted on the radio frequency front-end control bus meets the preset requirement, it is determined that the electronic device is receiving the MIPI RFFE control instruction. Even when there is no clock source, the wakeup signal can be immediately sent to wake up the system, so that the system enters the working state or the standby state. This resolves a current problem that a part of the MIPI RFFE control instruction in a low power mode is lost or power consumption of the system is increased because the system is woken up in advance.

## Description

This application claims priority to Chinese Patent Application No. 202310092771.7, filed with China National Intellectual Property Administration on January 16, 2023 and entitled "SYSTEM WAKEUP METHOD, ELECTRONIC DEVICE, AND COMPUTER-READABLE STORAGE MEDIUM", which is incorporated herein by reference in its entirety.

### TECHNICAL FIELD

This application relates to the field of communication technologies, and in particular, to a system wakeup method, an electronic device, and a computer-readable storage medium.

### BACKGROUND

For an electronic device that uses a wireless communication technology, to prolong standby time of the electronic device and reduce power consumption, the electronic device enters a low power mode when signal processing does not need to be performed. When communication needs to be performed, a system is woken up, so that the electronic device enters a working mode to perform communication.

In a related technology, the system is generally woken up in a wakeup manner such as a clock signal or an external interface signal. However, in a manner of waking up the system by using the clock signal or the external interface signal, a change of an MIPI RFFE control instruction cannot be sensed in real time. As a result, a problem that a part of the MIPI RFFE control instruction is lost in the low power mode is easily caused, or power consumption of the system is increased because the device is woken up in advance and duration in which the device is in a low power state is reduced.

### SUMMARY

This application provides a system wakeup method, an electronic device, and a storage medium, so that a case in which a part of an MIPI RFFE control instruction is lost in a low power mode or power consumption of a system is increased because the system is woken up in advance can be reduced.

According to a first aspect, a system wakeup method is provided, including: A radio frequency front-end module monitors a radio frequency front-end control bus in real time in a low power state; and sends a wakeup signal to a register status control module when a signal characteristic of a signal transmitted on the radio frequency front-end control bus meets a preset requirement, where the preset requirement is set based on a signal characteristic of an MIPI RFFE control instruction, and the wakeup signal is used to indicate the register status control module to generate an enable signal, so that a system switches from the low power state to a working state or a standby state.

Specifically, an electronic device may monitor the radio frequency front-end control bus in real time by using a slave control module (RFFE slave device) in a radio frequency control chip.

The MIPI RFFE control instruction may include an instruction start flag (sequence start condition, SSC), address encoding (slave address, SA) of the slave control module, a data frame (data frame), a parity (parity) bit, and an instruction end flag (bus park cycle, BPC).

The instruction start flag is an initial part of the MIPI RFFE control instruction, and indicates that the control instruction starts.

Specifically, the wakeup signal is used to indicate the register status control module (control and status register, CSR) to modify a status of an interrupt register, so that the interrupt register sends the enable signal to a back-end system.

The back-end system may be specifically a digital system clock phase locked loop module (phase locked loop, PLL) and a control module.

When the signal characteristic transmitted on the radio frequency front-end control bus meets the preset requirement, it may be determined that the electronic device is receiving the MIPI RFFE control instruction. To prevent a part of the MIPI RFFE control instruction from being lost, the wakeup signal is immediately sent to wake up the system, so that the system enters the working state or the standby state, to analyze and respond to the MIPI RFFE control instruction. In this way, a case in which a part of the MIPI RFFE control instruction is lost can be reduced, and a case in which power consumption of the system is affected because the system is woken up in advance and time in which the system is in a low power mode is reduced can be also reduced.

Specifically, when the signal characteristic of the signal transmitted on the radio frequency front-end control bus meets the preset requirement, the RFFE slave device module may send the wakeup signal to the register status control module. After receiving the wakeup signal, the register status control module may modify the status of the interrupt register, so that the interrupt register sends the enable signal to the digital system clock phase locked loop module and the control module.

It may be learned from the foregoing description that, when the signal characteristic transmitted on the radio frequency front-end control bus meets the preset requirement, it can be determined that the electronic device is receiving the MIPI RFFE control instruction. To prevent a part of the MIPI RFFE control instruction from being lost, without relying on an internal clock of the chip, the wakeup signal is sent to wake up the system, so that the system enters the working state or the standby state. In this way, a case in which a part of the MIPI RFFE control instruction is lost can be reduced, and a case in which power consumption of the system is affected because the system is woken up in advance and time in which the system is in the low power mode is reduced can be also reduced.

In a possible implementation of the first aspect, the preset requirement is set in advance based on an instruction start flag of the MIPI RFFE control instruction.

When receiving the MIPI RFFE control instruction, the RFFE slave device in the radio frequency control chip first detects the instruction start flag. Therefore, in this embodiment of this application, the preset requirement is set based on the instruction start flag (SSC), that is, the preset requirement may be set in advance based on a characteristic of the SSC of the MIPI RFFE control instruction.

In this way, when the signal characteristic transmitted on the radio frequency front-end control bus meets the preset requirement, it may be determined that the electronic device is receiving the MIPI RFFE control instruction.

In specific application, if the RFFE slave device detects that no clock signal is received on a clock data line and a signal transmitted on a signal data line meets a characteristic of the instruction start flag, it may be determined that the signal characteristic of the signal transmitted on the radio frequency front-end control bus meets the preset requirement. Otherwise, it is determined that the signal characteristic of the signal transmitted on the radio frequency front-end control bus does not meet the preset requirement.

It may be understood that the system may be woken up provided that the RFFE slave device determines that the MIPI RFFE control instruction is received. Therefore, the preset requirement only needs to be a requirement that meets the signal characteristic of the MIPI RFFE control instruction, and can ensure that data of the MIPI RFFE control instruction is not lost. Therefore, the preset requirement may be further set based on a first clock (namely, the first pulse received on the clock signal line) of the MIPI RFFE control instruction. That is, when it is detected that the clock data line outputs a clock signal pulse for the first time, it is determined that the signal characteristic transmitted on the radio frequency front-end control bus meets the preset requirement.

Certainly, to improve detection accuracy, the preset requirement may alternatively be set based on the characteristic of the SSC and the first clock of the MIPI RFFE control instruction. That is, when the characteristic of the SSC is detected and it is detected that the clock data line outputs a clock signal pulse for the first time, it is determined that the signal characteristic transmitted on the radio frequency front-end control bus meets the preset requirement.

A problem that a part of the MIPI RFFE control instruction is lost can be reduced, provided that the system is immediately woken up upon the MIPI RFFE control instruction is initially received. Specific content of the preset requirement is not limited in this application.

In a possible implementation of the first aspect, the radio frequency front-end control bus includes a clock signal line and a data signal line, and correspondingly,
if no clock signal is received on the clock data line and a signal transmitted on the signal data line meets a characteristic of the instruction start flag, it is determined that the signal characteristic of the signal transmitted on the radio frequency front-end control bus meets the preset requirement.

In a possible implementation of the first aspect, after the sending a wakeup signal to a register status control module when a signal characteristic of a signal transmitted on the radio frequency front-end control bus meets a preset requirement, the method further includes:
after receiving the wakeup signal, modifying, by the register status control module, a status of an interrupt register, so that the interrupt register outputs the enable signal.

When the signal characteristic of the signal transmitted on the radio frequency front-end control bus meets the preset requirement, the RFFE slave device module may send the wakeup signal to the register status control module. After receiving the wakeup signal, the register status control module may modify the status of the interrupt register, so that the interrupt register sends the enable signal to the digital system clock phase locked loop module and the control module.

In a possible implementation of the first aspect, after the sending a wakeup signal to a register status control module when a signal characteristic of a signal transmitted on the radio frequency front-end control bus meets a preset requirement, the method further includes:
sending the enable signal to a digital system clock phase locked loop module, so that the digital system clock phase locked loop module outputs a clock signal.

After receiving the enable signal sent by the interrupt register, the digital system clock phase locked loop module can generate an overall clock signal of the system, and output a clock control signal of the entire system, to start a clock source.

In a possible implementation of the first aspect, after the sending a wakeup signal to a register status control module when a signal characteristic of a signal transmitted on the radio frequency front-end control bus meets a preset requirement, the method further includes:
sending the enable signal to a control module, so that the control module enters a configuration procedure of a gated clock control module, to enable clock gating.

The control module may be a processor of the electronic device, or may be a micro controller (MCU) of the radio frequency control chip (RFIC). Certainly, the control module may alternatively be another module configured to control switching of a working state of the electronic device. This is not specifically limited in this application.

In a possible implementation of the first aspect, the wakeup signal is a control level.

That the RFFE slave device module may send the wakeup signal to the register status control module may be specifically as follows: The RFFE slave device module may output a control level to the register status control module (control and status register, CSR). After receiving the control level, the register status control module modifies the status of the interrupt register, so that the interrupt register outputs the enable signal.

In specific application, the control level may be a high-level signal, or may be a low level, and may be specifically set based on actual application. This is not limited in this application.

According to a second aspect, an embodiment of this application provides an electronic device, including:
a detection module, configured to monitor, by a radio frequency front-end module, a radio frequency front-end control bus in real time in a low power state; and
a wakeup module, configured to send a wakeup signal to a register status control module when a signal characteristic of a signal transmitted on the radio frequency front-end control bus meets a preset requirement, where
the preset requirement is set based on a signal characteristic of an MIPI RFFE control instruction, and the wakeup signal is used to indicate the register status control module to output an enable signal, so that a system switches from the low power state to a working state or a standby state.

According to a third aspect, an embodiment of this application provides an electronic device, including a memory, a processor, and a computer program stored in the memory and capable of running on the processor. When the processor executes the computer program, the method according to any one of the foregoing first aspect is implemented.

According to a fourth aspect, an embodiment of this application provides a computer-readable storage medium, where the computer-readable storage medium stores a computer program, and when the computer program is executed by a processor, the method according to any one of the foregoing first aspect is implemented.

According to a fifth aspect, an embodiment of this application provides a chip system, where the chip system includes a processor, the processor is coupled to a memory, and the processor executes a computer program stored in the memory, so as to implement the method according to any one of the first aspect. The chip system may be a single chip or a chip module including a plurality of chips.

According to a sixth aspect, an embodiment of this application provides a computer program product. When the computer program product runs on an electronic device, the electronic device is enabled to perform the method according to any one of the foregoing first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of a system architecture for applying an MIPI RFFE protocol;
FIG. 2 is a schematic diagram of a data structure of an MIPI RFFE control instruction;
FIG. 3 is a schematic flowchart of current implementation of system wakeup in a GPIO wakeup manner;
FIG. 4 is a schematic diagram of a hardware structure of an electronic device according to an embodiment of this application;
FIG. 5 is a schematic flowchart of implementation of a system wakeup method according to an embodiment of this application;
FIG. 6 is a schematic diagram of a structure of a radio frequency control chip; and
FIG. 7 is a schematic interaction diagram of performing a system wakeup method by the radio frequency control chip shown in FIG. 6.

### DESCRIPTION OF EMBODIMENTS

It should be noted that, terms used in the DESCRIPTION OF EMBODIMENTS section of embodiments of this application are only used to explain specific embodiments of this application, and are not intended to limit this application. In the descriptions of the embodiments of this application, unless otherwise specified, "/" means "or". For example, A/B may represent A or B. In this specification, "and/or" is merely an association relationship for describing associated objects and represents that three relationships may exist. For example, "A and/or B" may represent the following three cases: Only A exists, both A and B exist, and only B exists. In addition, in the descriptions of the embodiments of this application, unless otherwise specified, "a plurality of" means two or more than two, and "at least one" and "one or more" mean one, two, or more than two.

In the following, the terms "first" and "second" are used merely for the purpose of description, and shall not be construed as indicating or implying relative importance or implicitly indicating a quantity of indicated technical features. Therefore, features defined with "first" and "second" may explicitly or implicitly include one or more of the features.

As described in the specification, referring to "one embodiment" or "some embodiments" or the like means that one or more embodiments of this application include particular features, structures, or characteristics described with reference to the embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

A radio frequency front-end module (front-end modules, FEM) is a processing module that implements receiving/sending of a wireless signal for an electronic device, and a device in the radio frequency front-end module may be controlled by using a radio frequency control chip (radio frequency integrated circuit, RFIC), to implement wireless communication functions such as wifi, Bluetooth, and cellular communication.

The radio frequency front-end module generally includes devices such as an amplifier, a modem, a filter, a duplexer, a radio frequency switch, and a receiver/transmitter.

The amplifier is responsible for amplifying a radio frequency signal of a transmit channel. The modem is responsible for modulating/demodulating the radio frequency signal. The filter is responsible for filtering transmit and receive signals. The duplexer is responsible for duplex switching of a frequency division duplex system and filtering a radio frequency signal of a receive channel/transmit channel. The radio frequency switch is responsible for switching between the receive channel and the transmit channel. The receiver/transmitter is used for frequency conversion and channel selection of the radio frequency signal.

An antenna inputs a received receive signal for processing through a receive channel of the RFIC of the radio frequency front-end module. The RFIC may also transmit a transmit signal to the antenna through a transmit channel of the radio frequency front-end module, and the antenna radiates the transmit signal to implement receiving/sending of the wireless signal.

A mobile industry processor interface (mobile industry processor interface, MIPI) protocol is a communications protocol that is proposed by the Mobile Industry Processor Interface (mobile industry processor interface, MIPI) Alliance and that is used to standardize communication between devices of a mobile terminal system.

An MIPI radio frequency front-end interface standard protocol (MIPI RFFE protocol) is a control interface standard that is introduced by a radio frequency front-end working group of the MIPI alliance and that is used to control a radio frequency front end of a mobile terminal.

Before the MIPI RFFE protocol is introduced, a solution for controlling the radio frequency front-end module is that control is mainly implemented through parallel general-purpose input/output (general-purpose input/output, GPIO) interfaces, which requires many interfaces and makes the system difficult to load. To reduce the quantity of interfaces required for controlling the radio frequency front-end module, the MIPI alliance proposes the MIPI RFFE protocol used to control the radio frequency front-end module.

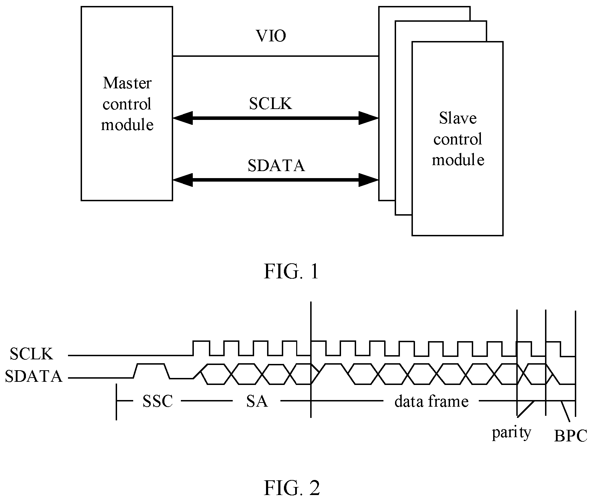

Reference is made to FIG. 1. FIG. 1 shows a system architecture for applying an MIPI RFFE protocol. As shown in FIG. 1, one master control module (RFFE master device) may be mounted on a single radio frequency front-end control bus (MIPI RFFE bus). The master control module is a device configured to control the MIPI RFFE bus, and may generally be an RFIC in an electronic device. In addition, a maximum of 15 slave control modules (RFFE slave device) may be mounted on the single MIPI RFFE bus. The slave control module is a controlled device, and is generally a device in a radio frequency front-end module.

Two signal lines are used for the MIPI RFFE bus, one is a clock signal line (SCLK) controlled by the RFFE Master Device, and the other is a unidirectional/bidirectional data signal line (SDATA). In addition, there is also an input/output reference voltage line (VIO), and the SCLK and the SDATA are connected to the bus in parallel. Each slave control module is provided with one input interface of the SCLK signal line, one input/output interface of the SDTA, and one VIO interface to implement signal synchronization with the master control module.

Referring to FIG. 2, an MIPI RFFE control instruction may include an instruction start flag (sequence start condition, SSC), address encoding (slave address, SA) of the slave control module, a data frame (data frame), a parity (parity) bit, and an instruction end flag (bus park cycle, BPC).

The instruction start flag is an initial part of the MIPI RFFE control instruction, and indicates that the control instruction starts.

For many electronic devices (such as a mobile phone, a tablet computer, and a wearable apparatus) that use a wireless communication technology, to prolong standby time and reduce power consumption, the electronic device generally enters a low power mode when use of the electronic device is stopped. When communication needs to be performed, a back-end load circuit in the electronic device needs to be woken up to perform communication.

When communication needs to be performed, a system is basically woken up by using a clock signal or an external interface signal.

The following is described by using an example in which low-power wakeup is performed by pulling up an input external interface signal through the general-purpose input/output (general-purpose input/output, GPIO) interface.

A pull-down resistor is disposed inside the GPIO interface. When there is no signal input, the GPIO interface outputs a low level by default. When there is a signal input, the GPIO interface outputs a high level when the back-end load circuit in the electronic device needs to be woken up.

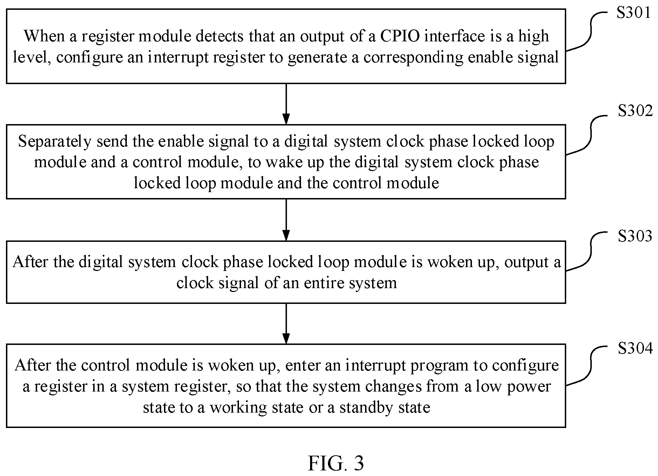

Referring to FIG. 3, the method for performing low-power wakeup by pulling up an input through the GPIO may include the following steps:
S301: When a register module detects that an output of the CPIO interface is a high level, configure an interrupt register to generate a corresponding enable signal.
S302: Separately send the enable signal to the digital system clock phase locked loop module and the control module, to wake up the digital system clock phase locked loop module and the control module.
S303: After the digital system clock phase locked loop module is woken up, output a clock signal of the entire system.
S304: After the control module is woken up, enter an interrupt program to configure a register in a system register, so that the system changes from a low power state to a working state or a standby state.

However, in a manner of performing wakeup by using the clock signal or performing wakeup through the external interface, targeted system wakeup cannot be performed for the MIPI RFFE control instruction. As a result, an instruction loss in the low power state is easily caused, or power consumption of the system is affected because the system is woken up in advance and time in which the system is in the low power mode is reduced.

To resolve the foregoing problem, the embodiments of this application provide a system wakeup method. When a signal characteristic transmitted on a radio frequency front-end control bus meets a preset requirement, it is determined that an electronic device is receiving an MIPI RFFE control instruction. To prevent a part of the MIPI RFFE control instruction from being lost, without relying on an internal clock, a wakeup signal is immediately sent to wake up a system, so that the system enters a working state or a standby state. This can reduce a case in which a part of the MIPI RFFE control instruction is lost, and can also reduce a case in which power consumption of the system is affected because the system is woken up in advance and time in which the system is in a low power mode is reduced.

With reference to the accompanying drawings, the following describes in detail the system wakeup method provided in the embodiments of this application. In the following descriptions, for the purpose of description instead of limitation, specific details such as a specific system structure and a technology are proposed, to provide a thorough understanding of the embodiments of this application.

The system wakeup method may be performed by an electronic device, which, for example, may be a mobile phone, a wearable device (such as a smartwatch, a smart band, smart glasses, or smart jewelry), a tablet computer, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and another electronic device with a network connection function.

An example embodiment of the electronic device includes but is not limited to a device equipped with iOS^{®}, Android^{®}, Microsoft^{®}, Harmony OS (Harmony OS), or another operating system. The electronic device may alternatively be another electronic device such as a laptop computer (laptop) having a touch-sensitive surface (for example, a touch panel). A specific type of the electronic device is not limited in the embodiments of this application.

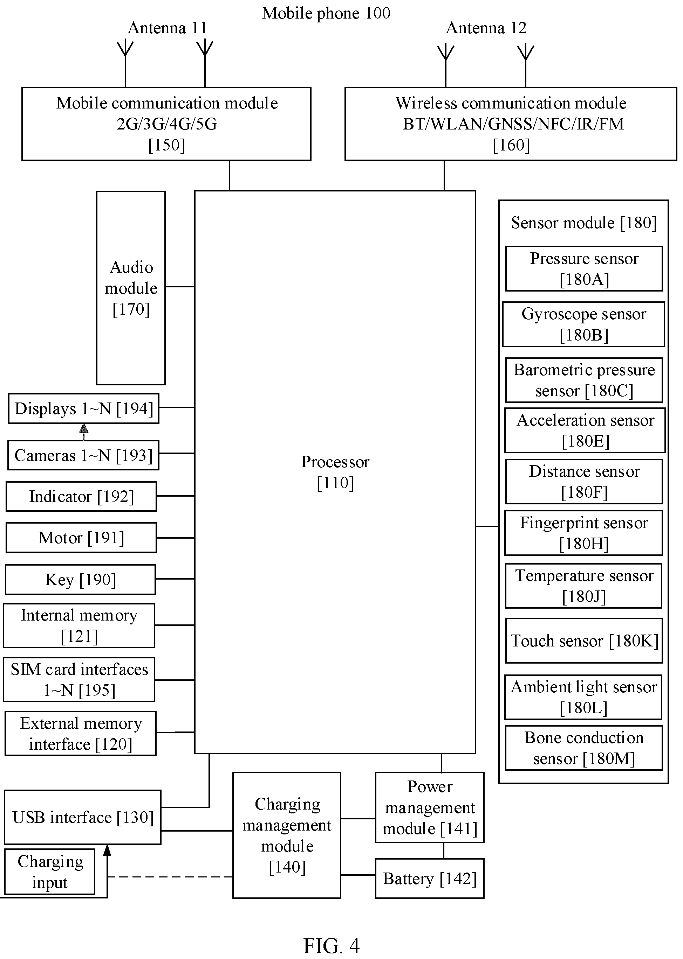

For example, the electronic device is a mobile phone. FIG. 4 is a schematic diagram of a structure of a mobile phone according to an embodiment of this application.

FIG. 4 is a schematic diagram of a structure of a mobile phone 100. The mobile phone 100 may include a processor 110, an external memory interface 120, an internal memory 121, a universal serial bus (universal serial bus, USB) interface 130, a charging management module 140, a power management module 141, a battery 142, an antenna 11, an antenna 12, a mobile communication module 150, a wireless communication module 160, an audio module 170, a sensor module 180, a key 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile phone 100. In some other embodiments of this application, the mobile phone 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the mobile phone 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, thereby implementing a touch function of the mobile phone.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, thereby implementing a photographing function of the mobile phone. The processor 110 communicates with the display 194 through the DSI interface, thereby implementing a display function of the mobile phone. The MIPI interface may also be applied to RFFE wireless signal processing, that is, a device in an FEM may be controlled through the MIPI interface.

The GPIO interface may be configured by software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to be connected to a charger to charge the mobile phone, or may be configured to transmit data between the mobile phone and a peripheral device, may be configured to be connected to a headset to play audio by using the headset. The interface may also be configured to be connected to another mobile phone such as an AR device.

It may be understood that an interface connection relationship between the modules shown in this embodiment is merely an example for description and does not constitute a limitation on the structure of the mobile phone. In some other embodiments of this application, the mobile phone may alternatively use an interface connection manner different from those in the foregoing embodiments or a combination of a plurality of interface connection manners.

A wireless communication function of the mobile phone may be implemented by using the antenna 11, the antenna 12, the mobile communication module 150, the wireless communication module 160, the modem processor, the baseband processor, and the like.

The antenna 11 and the antenna 12 are configured to transmit and receive electromagnetic wave signals. Each antenna in the mobile phone may be configured to cover one or more communication frequency bands. Different antennas may be further multiplexed to increase antenna utilization. For example, the antenna 11 may be multiplexed as a diversity antenna for a wireless local area network. In some other embodiments, the antenna may be used in combination with a tuning switch.

The mobile communication module 150 may provide a solution for wireless communication that is applied to the mobile phone and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 11, perform processing such as filtering or amplification on the received electromagnetic wave, and transmit a processed electromagnetic wave to the modem processor modem for demodulation. The mobile communication module 150 may further amplify a signal modulated by the modem processor modem, and convert the signal into an electromagnetic wave by using the antenna 11 for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor modem may include a modulator and a demodulator. The modulator is configured to modulate a to-be-sent low frequency baseband signal into a medium-high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the mobile phone and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone, the antenna 11 is coupled to the mobile communication module 150, and the antenna 12 is coupled to the wireless communication module 160, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quas-zenith satellite system, QZSS), and/or a satellite based augmentation system (satellite based augmentation systems, SBAS).

When wireless communication does not need to be performed, the mobile phone may be in a low power state (sleep state). After a control instruction is received, a system of the mobile phone is woken up, so that the system of the mobile phone is in a working state (active state) or a standby state.

In the embodiments of this application, to reduce a case in which a part of an MIPI RFFE control instruction is lost when the mobile phone is in the low power state, a characteristic part of the MIPI RFFE control instruction may be detected to determine whether the MIPI RFFE control instruction is input. In addition, without relying on an internal clock signal, a wakeup signal is sent to wake up the system, so that the system switches from the low power state to the working state or the standby state.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oled, a quantum dot light emitting diode (quantum dot light emitting diodes, QLED), or the like. In some embodiments, the mobile phone may include one or N displays 194, where N is a positive integer greater than 1.

A series of graphical user interfaces (graphical user interfaces, GUI) may be displayed on the display 194 of the mobile phone, and these GUIs are all home screens of the mobile phone. Usually, a size of the display 194 of the mobile phone is fixed, and only a limited quantity of controls can be displayed on the display 194 of the mobile phone. A control is a GUI element. The control is a software component included in an application, and controls all data processed by the application and an interaction operation related to the data. A user may interact with the control through direct manipulation (direct manipulation), to read or edit information about the application. Usually, controls may include visual interface elements such as an icon, a button, a menu, a tab, a text box, a dialog box, a status bar, a navigation bar, and a Widget.

The external memory interface 120 may be configured to connect to an external memory card such as a Micro SD card, to extend a storage capability of the mobile phone. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The processor 110 runs the instruction stored in the internal memory 121, to perform various function applications and data processing of the mobile phone. For example, in this embodiment, the processor 110 may generate a geo-fence by executing the instructions stored in the internal memory 121. The internal memory 121 may include a program storage area and a data storage area. The program storage area may store an operating system, an application required by at least one function (for example, a sound playback function or an image playback function), and the like. The data storage area may store data (such as audio data and a phone book) created during use of the mobile phone, and the like. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the mobile phone by running the instructions stored in the internal memory 121 and/or instructions stored in the memory disposed in the processor.

The SIM card interface 195 is configured to be connected to a SIM card. The SIM card may be inserted into the SIM card interface 195 or removed from the SIM card interface 195, to come into contact with or be separated from the mobile phone. The mobile phone may support one or N SIM card interfaces, where N is a positive integer greater than 1. The SIM card interface 195 can support a Nano SIM card, a Micro SIM card, a SIM card, and the like. A plurality of cards may be simultaneously inserted into a same SIM card interface 195. The plurality of cards may be of a same type or may be of different types. The SIM card interface 195 may also be compatible with SIM cards of different types. The SIM card interface 195 may be further compatible with an external memory card. The mobile phone interacts with a network through a SIM card, to implement functions such as calling and data communication. In some embodiments, the mobile phone uses eSIM, namely, an embedded SIM card. The eSIM card may be embedded into the mobile phone, and cannot be separated from the mobile phone.

The system wakeup method provided in the embodiments of this application may be performed by the foregoing electronic device. With reference to the accompanying drawings, the following describes the system wakeup method provided in the embodiments of this application.

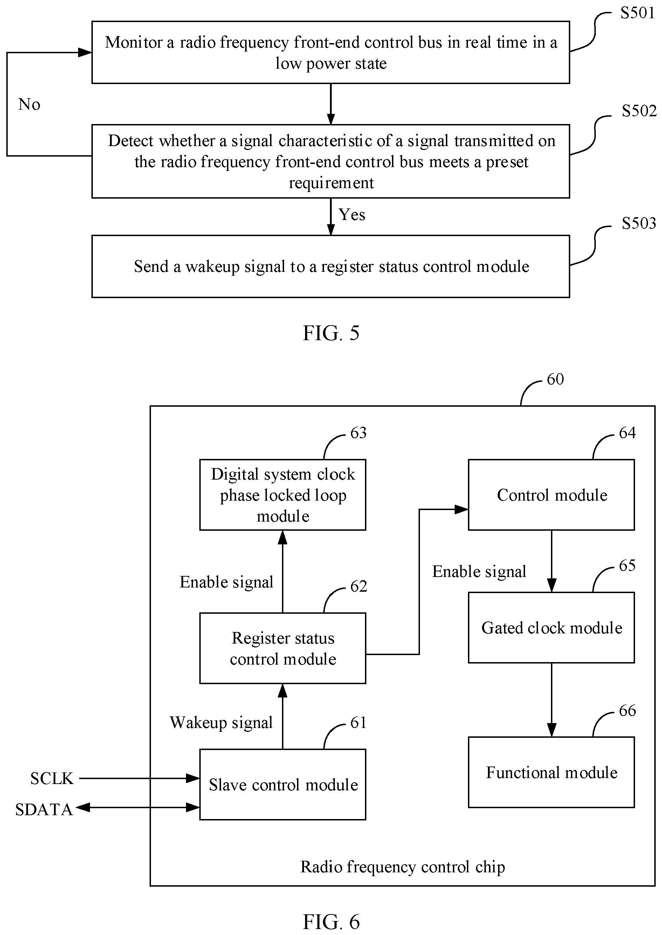

Reference is made to FIG. 5, which is a schematic flowchart of implementation of a system wakeup method according to an embodiment of this application. As shown in FIG. 5, the system wakeup method may specifically include at least the following steps.

S501: Monitor a radio frequency front-end control bus in real time in a low power state.

In this embodiment of this application, the radio frequency front-end control bus (MIPI RFFE bus) may include a clock signal line (SCLK) and a data signal line (SDATA).

In this embodiment of this application, the electronic device may monitor the clock signal line and the data signal line in real time by using a slave control module (RFFE slave device) in a radio frequency control chip.

In specific application, the clock signal line may output a clock control signal, and the data signal line may implement data transmission between a master control module and the slave control module.

An MIPI RFFE control instruction may be transmitted by using the clock signal line (SCLK) and the signal data line (SDATA). For a data structure of the MIPI RFFE control instruction, refer to related descriptions in FIG. 2. To avoid repetition, details are not described herein again.

S502: Detect whether a signal characteristic of a signal transmitted on the radio frequency front-end control bus meets a preset requirement; and if yes, perform S503; otherwise, continue to perform S501.

In specific application, the preset requirement is set based on a signal characteristic of the MIPI RFFE control instruction. Provided that it is detected that the signal characteristic of the signal transmitted on the radio frequency front-end control bus meets the preset requirement, the slave control module may determine that a signal received by the electronic device is the MIPI RFFE control instruction.

In specific application, the MIPI RFFE control instruction may include an instruction start flag (sequence start condition, SSC), address encoding (slave address, SA) of the slave control module, a data frame (data frame), a parity (parity) bit, and an instruction end flag (bus park cycle, BPC).

The instruction start flag is an initial part of the MIPI RFFE control instruction, and indicates that the control instruction starts.

When receiving the MIPI RFFE control instruction, the slave control module in a radio frequency front-end module first detects the instruction start flag. Therefore, in this embodiment of this application, the preset requirement is set based on the instruction start flag (SSC), that is, the preset requirement may be set in advance based on a characteristic of the SSC of the MIPI RFFE control instruction.

In this way, when the signal characteristic transmitted on the radio frequency front-end control bus meets the preset requirement, it may be determined that the electronic device is receiving the MIPI RFFE control instruction.

In specific application, if the slave control module detects that no clock signal is received on the clock data line and a signal transmitted on the signal data line meets a characteristic of the instruction start flag, it may be determined that the signal characteristic of the signal transmitted on the radio frequency front-end control bus meets the preset requirement. Otherwise, it is determined that the signal characteristic of the signal transmitted on the radio frequency front-end control bus does not meet the preset requirement.

It may be understood that the system may be woken up provided that the slave control module determines that the MIPI RFFE control instruction is received. Therefore, the preset requirement only needs to be a requirement that meets the signal characteristic of the MIPI RFFE control instruction, and can ensure that data of the MIPI RFFE control instruction is not lost. Therefore, the preset requirement may be further set based on a first clock (namely, the first pulse received on the clock signal line) of the MIPI RFFE control instruction. That is, when it is detected that the clock data line outputs a clock signal pulse for the first time, it is determined that the signal characteristic transmitted on the radio frequency front-end control bus meets the preset requirement.

Certainly, to improve detection accuracy, the preset requirement may alternatively be set based on the characteristic of the SSC and the first clock of the MIPI RFFE control instruction. That is, when the characteristic of the SSC is detected and it is detected that the clock data line outputs a clock signal pulse for the first time, it is determined that the signal characteristic transmitted on the radio frequency front-end control bus meets the preset requirement.

A problem that a part of the MIPI RFFE control instruction is lost can be reduced, provided that the system is immediately woken up upon the MIPI RFFE control instruction is initially received. Specific content of the preset requirement is not limited in this application.

S503: Send a wakeup signal to a register status control module.

The wakeup signal is used to indicate the register status control module (control and status register, CSR) to modify a status of an interrupt register, so that the interrupt register sends an enable signal to a back-end system.

In specific application, the wakeup signal is sent to the register status control module by using the RFFE slave device in the radio frequency control chip.

The back-end system may be specifically a digital system clock phase locked loop module (phase locked loop, PLL) and a control module.

The control module may be a processor of the electronic device, or may be a micro controller (MCU) of the radio frequency control chip (RFIC). Certainly, the control module may alternatively be another module configured to control switching of a working state of the electronic device. This is not specifically limited in this application.

In the low power state, when the MIPI RFFE control instruction is received, without relying on an internal clock of the chip, the slave device inside the radio frequency control chip may generate a control level and send the control level to the CSR module, so that the CSR module configures the interrupt register to implement configuration of information such as the internal clock of the system, so as to wake up the internal clock source and the control module (for example, the MCU). After the MCU is woken up, register configuration may be performed on an internal system of the entire radio frequency control chip, so that the system switches from the low power state to the working state, to perform data processing on obtained information. This reduces a case in which a part of the MIPI RFFE control instruction is lost, and can also reduce a case in which power consumption of the system is increased because the system is woken up in advance.

When the signal characteristic transmitted on the radio frequency front-end control bus meets the preset requirement, it may be determined that the slave control module is receiving the MIPI RFFE control instruction. To prevent a part of the MIPI RFFE control instruction from being lost, the system needs to be immediately woken up, so that the system enters the working state, to analyze and respond to the MIPI RFFE control instruction. Therefore, the RFFE slave device sends the wakeup signal to the register status control module, so that the register status control module modifies the status of the interrupt register, to enable the interrupt register to output the enable signal.

In specific application, when the signal characteristic of the signal transmitted on the radio frequency front-end control bus meets the preset requirement, the RFFE slave device module may send the wakeup signal to the register status control module. After receiving the wakeup signal, the register status control module may modify the status of the interrupt register, so that the interrupt register sends the enable signal to the digital system clock phase locked loop module and the control module.

After receiving the enable signal sent by the interrupt register, the digital system clock phase locked loop module can generate an overall clock signal of the system, and output a clock control signal of the entire system.

After receiving the enable signal sent by the interrupt register, the control module may enter a configuration procedure of a gated clock control module (SYS_ctrl), to configure a register in a system register, so that clock gating is enabled, and another functional module normally starts working, that is, the system changes from the low power state (sleep state) to the working state (active state) or a standby state (startup state).

In specific application, that the RFFE slave device module may send the wakeup signal to the register status control module (control and status register, CSR) may be specifically as follows: The RFFE slave device module may output a control level to the register status control module (control and status register, CSR). After receiving the control level, the register status control module modifies the status of the interrupt register, so that the interrupt register outputs the enable signal.

In specific application, the control level may be a high-level signal, or may be a low level, and may be specifically set based on actual application. This is not limited in this application.

In specific application, the enable signal output by the interrupt register may also be a high-level signal or a low-level signal, and may be specifically set based on actual application. This is not limited in this application.

For example, reference is made to FIG. 6. FIG. 6 is a schematic diagram of a structure of a radio frequency control chip. As shown in FIG. 6, the radio frequency control chip (RFIC) 60 may include a slave control module (RFFE slave device) 61, a register status control module (control and status register, CSR) 62, a digital system clock phase locked loop module (phase locked loop, PLL) 63, a control module 64, a gated clock module (SYS_ctrl) 65, and a functional module 66.

The slave control module 61 is connected to a clock signal line (SCLK) and a signal data line (SDATA), and determines, by detecting a signal on the clock signal line (SCLK) and a signal on the signal data line (SDATA), whether an MIPI RFFE control instruction is received, and sends a wakeup signal to an interrupt register of the register status control module 62 when it is determined that the MIPI RFFE control instruction is received. After receiving the wakeup signal, the register status control module 62 may output an enable signal. The enable signal is used to wake up the digital system clock phase locked loop module 63 and the control module 64.

The slave control module 61 may be connected to the register status control module 62. The register status control module 62 may be separately connected to the digital system clock phase locked loop module 63 and the control module 64. The control module 64 may be separately connected to the gated clock module 65 and the functional module 66.

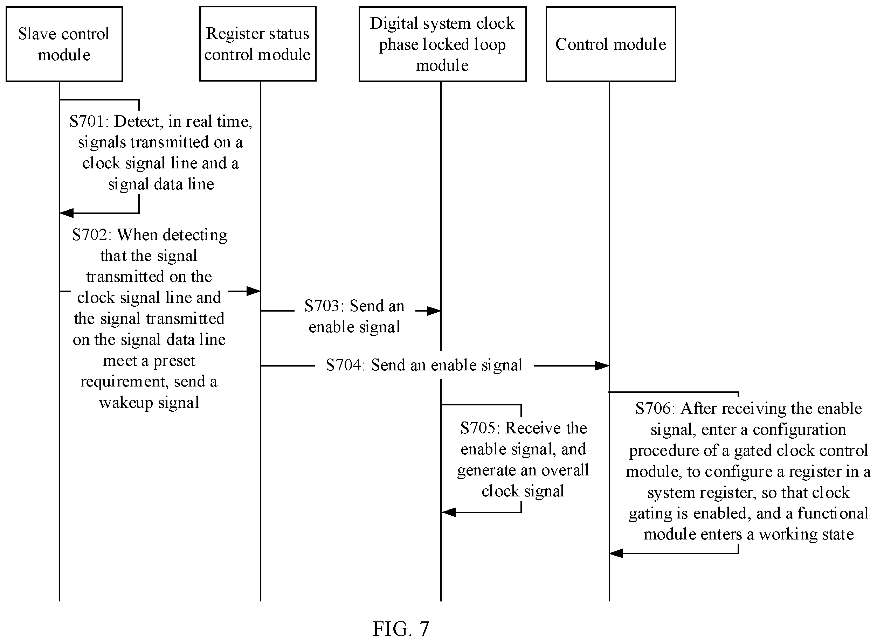

Reference is made to FIG. 7. FIG. 7 shows a schematic interaction process of performing a system wakeup method by the modules shown in FIG. 6.

As shown in FIG. 7, the system wakeup method may include the following steps.

S701: A slave control module detects, in real time, signals transmitted on a clock signal line and a signal data line.

The slave control module is connected to the clock signal line SCLK by using a CLK pin, and is connected to the signal data line SDATA by using a DATA pin, so that the slave control module can receive the signals transmitted on the clock signal line SCLK and the signal data line SDATA, and can detect, in real time, the signals transmitted on the clock signal line and the signal data line, so as to detect whether an MIPI RFFE control instruction is received.

S702: When detecting that the signal transmitted on the clock signal line and the signal transmitted on the signal data line meet a preset requirement, the slave control module sends a wakeup signal to a register status control module.

In specific application, the slave control module may output a high-level signal to the register status control module, or output a low-level signal to the register status control module. This may be specifically set based on actual application.

S703: After receiving the wakeup signal, the register status control module modifies a status of an interrupt register, so that the interrupt register sends an enable signal to a digital system clock phase locked loop module.

The register status control module may modify the status of the terminal register to 0 or 1. This may be specifically set based on actual application.

After the register status control module modifies the status of the interrupt register, the interrupt register outputs the corresponding enable signal to wake up the digital system clock phase locked loop module.

S704: After receiving the wakeup signal, the register status control module modifies a status of the interrupt register, so that the interrupt register sends an enable signal to a control module.

After the register status control module modifies the status of the interrupt register, the interrupt register outputs the corresponding enable signal to wake up the control module.

Herein, the foregoing S703 and the foregoing S704 may be performed in a sequence of performing S703 before S704, or performing S704 before S703, or performing S703 and S704 simultaneously. This is not specifically limited in this application.

S705: After receiving the enable signal, the digital system clock phase locked loop module generates an overall clock signal.

S706: After receiving the enable signal, the control module enters a configuration procedure of a gated clock control module, to configure a register in a system register, so that clock gating is enabled, and the functional module enters a working state or a standby state.

Similarly, the foregoing S705 and the foregoing S706 may be performed in a sequence of performing S705 before S706, or performing S706 before S705, or performing S705 and S706 simultaneously. This is not specifically limited in this application.

The foregoing functional module may be a module such as an amplifier, a modem, a filter, a duplexer, a radio frequency switch, and a receiver/transmitter.

Compared with a manner, shown in FIG. 3, of implementing system wakeup by pulling up an output level of the GPIO interface, in the system wakeup method shown in FIG. 7, the GPIO interface is omitted, and the system may be immediately woken up when the MIPI RFFE control instruction is detected. This reduces a case in which a part of the MIPI RFFE control instruction is lost, and can also reduce a case in which power consumption of the system is increased because the system is woken up in advance when no MIPI RFFE control instruction is received.

It may be understood that the electronic device may set a plurality of wakeup manners. The electronic device may wake up the system in a GPIO wakeup manner, or may wake up the system in a clock wakeup manner. Alternatively, the electronic device may wake up the system in a wakeup manner that is provided in this embodiment of this application and that is implemented by detecting the signal characteristic of the MIPI RFFE, so as to implement sensing of a tuning characteristic of an MIPI RFFE antenna, intelligent wakeup in an antenna scenario, and intelligent state switching in a tuning scenario.

It may be learned from the foregoing description that, in the system wakeup method provided in this embodiment of this application, when the signal characteristic transmitted on the radio frequency front-end control bus meets the preset requirement, it is determined that the slave control module is receiving the MIPI RFFE control instruction. To prevent a part of the MIPI RFFE control instruction from being lost, the wakeup signal is immediately sent to wake up the system, so that the system enters the working state or the standby state. This can resolve a current problem that a part of the MIPI RFFE control instruction is lost in the low power mode, or a problem that power consumption of the system is affected because the system needs to be woken up in advance and time in which the system is in the low power mode is reduced.

An embodiment of this application further provides a computer-readable storage medium. The computer-readable storage medium stores instructions. When the instructions run on a computer or a processor, the computer or the processor is enabled to perform one or more steps in any one of the foregoing methods.

An embodiment of this application further provides a computer program product including instructions. When the computer program product runs on a computer or a processor, the computer or the processor is enabled to perform one or more steps in any one of the foregoing methods.

An embodiment of this application further provides a chip system including instructions. When the instructions run on a computer or a processor, the computer or the processor is enabled to perform one or more steps in any one of the foregoing methods.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The available medium may be a magnetic medium (such as a floppy disk, a hard disk, or a magnetic tape), an optical medium (such as a DVD), a semiconductor medium (such as a solid state disk (solid state disk, SSD)), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A system wakeup method, comprising:
monitoring a radio frequency front-end control bus in real time in a low power state; and
sending a wakeup signal to a register status control module when a signal characteristic of a signal transmitted on the radio frequency front-end control bus meets a preset requirement, wherein
the preset requirement is set based on a signal characteristic of an MIPI RFFE control instruction, and the wakeup signal is used to indicate the register status control module to output an enable signal, so that a system switches from the low power state to a working state or a standby state.

2. The system wakeup method according to claim 1, wherein the preset requirement is set in advance based on an instruction start flag of the MIPI RFFE control instruction.

3. The system wakeup method according to claim 2, wherein the radio frequency front-end control bus comprises a clock signal line and a data signal line, and correspondingly,
if no clock signal is received on the clock data line and a signal transmitted on the signal data line meets a characteristic of the instruction start flag, it is determined that the signal characteristic of the signal transmitted on the radio frequency front-end control bus meets the preset requirement.

4. The system wakeup method according to claim 1, after the sending a wakeup signal to a register status control module when a signal characteristic of a signal transmitted on the radio frequency front-end control bus meets a preset requirement, further comprising:
after receiving the wakeup signal, modifying, by the register status control module, a status of an interrupt register, so that the interrupt register outputs the enable signal.

5. The system wakeup method according to claim 1, after the sending a wakeup signal to a register status control module when a signal characteristic of a signal transmitted on the radio frequency front-end control bus meets a preset requirement, further comprising:
sending the enable signal to a digital system clock phase locked loop module, so that the digital system clock phase locked loop module outputs a clock signal.

6. The system wakeup method according to claim 1, after the sending a wakeup signal to a register status control module when a signal characteristic of a signal transmitted on the radio frequency front-end control bus meets a preset requirement, further comprising:
sending the enable signal to a control module, so that the control module enters a configuration procedure of a gated clock control module, to enable clock gating.

7. The system wakeup method according to any one of claims 1 to 6, wherein the wakeup signal is a control level.

8. The system wakeup method according to claim 7, wherein the control level is a high level or a low level.

9. An electronic device, comprising a processor and a memory, wherein the processor is coupled to the memory, the memory is configured to store a computer program, and when the processor executes the computer program, the electronic device is enabled to perform steps of the method according to any one of claims 1 to 8.

10. A computer-readable storage medium, wherein the computer-readable storage medium comprises a computer program, and when the computer program runs on a computer, the computer is enabled to perform steps of the method according to any one of claims 1 to 8.

11. A chip, comprising a processor, wherein the processor is coupled to a memory, the memory is configured to store computer program instructions, and when the processor executes the computer program instructions, the chip is enabled to perform steps of the method according to any one of claims 1 to 8.
